# EUROPÄISCHE PATENTSCHRIFT

(11) **EP 0 830 526 B1**
(45) Veröffentlichungstag und Bekanntmachung des Hinweises auf die Patenterteilung: **03.05.2000**
(21) Anmeldenummer: 97923735.1
(22) Anmeldetag: 08.04.1997
(51) Int. Cl.: F16G 13/16

(54) **ENERGIEFÜHRUNGSKETTE**
POWER GUIDE CHAIN
CHAINE DE GUIDAGE D'ENERGIE

(30) Priorität: 22.04.1996 DE 29607171 U
(43) Veröffentlichungstag der Anmeldung: 25.03.1998
(73) Patentinhaber: IGUS SPRITZGUSSTEILE FÜR DIE INDUSTRIE GmbH, D-51147 Köln (DE)
(72) Erfinder: BLASE, Günter, D-51429 Bergisch Gladbach (DE)
(74) Vertreter: Stachow, E.-W., Prof. Dr.
(86) Internationale Anmeldenummer: DE9700726
(87) Internationale Veröffentlichungsnummer: WO9740288

(56) Entgegenhaltungen:
- EP-A- 0 499 784
- DE-A- 3 431 531
- DE-U- 29 607 171

## Beschreibung

Die Erfindung betrifft eine Energieführungskette zur Führung von Schläuchen oder dergleichen zwischen zwei Anschlußpunkten, von denen wenigstens einer ortsveränderlich ist, mit mehreren gelenkig miteinander verbundenen Kettengliedern aus Seitenteilen und Querstegen, wobei die Verschwenkbarkeit benachbarter Kettenglieder gegeneinander durch an den Kettengliedern angeordnete, korrespondierende Anschläge mit Anschlagflächen begrenzt ist und wobei die Kettenglieder mit Mitteln zur Verringerung der Abwinklungsgeschwindigkeit benachbarter Kettenglieder versehen sind.

Die Verschwenkbarkeit der Kettenglieder gegeneinander wird beispielsweise dann eingeschränkt, wenn freitragende Energieführungsketten vorliegen, d. h., wenn das Obertrum der Energieführungskette bei deren Verfahrung nicht mit dem Untertrum zur Anlage kommt, sondern in einem vertikalen Abstand zu diesem geführt wird. Aufgrund der eingeschränkten Verschwenkbarkeit benachbarter Kettenglieder zueinander ist eine Richtungsänderung der Energieführungskette nur bis zu einem bestimmten, konstruktiv vorgegebenen Biegeradius möglich. Dieser Biegeradius ist an die konstruktiven Gegebenheiten der Vorrichtung, die mit einer Energieführungskette auszustatten ist, sowie an die Flexibilität der in der Energieführungskette anzuordnenden Führungsleitungen wie Schläuche und dergleichen anzupasssen.

Die Verschwenkbarkeit benachbarter Kettenglieder zueinander kann durch speziell hierfür vorgesehene Anschläge begrenzt werden. Als Anschläge sind jedoch allgemein diejenigen Bereiche der Kettenglieder aufzufassen, die bei der Verschwenkung benachbarter Kettenglieder mit den Bereichen des jeweils benachbarten Kettengliedes zur Anlage kommen und dadurch die Verschwenkbarkeit der Kettenglieder zueinander begrenzen.

Die schnelle Verfahrung von Energieführungsketten ist oftmals mit einer beträchtlichen und als störend empfundenen Geräuschemission verbunden.

Die EP 0 499 784 A1 beschreibt eine Energieführungskette mit Kettengliedern aus zwei parallelen Kettenlaschen und diese miteinander verbindenden Traversen, wobei der gegenseitige Schwenkwinkel der Kettenglieder durch Anschlageinsätze begrenzt wird. Die Anschlageinsätze sind unverdrehbar in korrespondierenden Ausnehmungen der Kettenlaschen angeordnet und mit zwei diametral gegenüberliegend angeordneten Schlitzen und Ausnehmungen versehen, welche den Schwenkwinkel benachbarter Kettenglieder bestimmen. In den Ausnehmungen der Kettenlaschen sind Anschlagnocken angeordnet, welche in die Schlitze und die Ausnehmungen der Anschlageinsätze hineinragen, wobei die Anschlageinsätze scheibenförmig ausgebildet sind. Durch Verdrehen oder Austauschen der Anschlageinsätze, die aus Kunststoff bestehen können, kann der Krümmungsradius der Energieführungskette auf einfache Weise an verschiedene Anwendungsfälle angepaßt werden. Durch die zusätzlichen Anschlageinsätze kann die Geräuschemission nicht in allen Fällen zuverlässig vermindert werden.

Es ist Aufgabe der vorliegenden Erfindung, eine Energieführungskette zu schaffen, die hohe Verfahrgeschwindigkeiten ermöglicht und eine verringerte Geräuschemission aufweist, und die über einen langen Zeitraum zuverlässig betreibbar ist.

Erfindungsgemäß wird die Aufgabe dadurch gelöst, daß die Mittel zur Verringerung der Abwinkelungsgeschwindigkeit derart ausgebildet sind, daß die Seitenteile mit Auflaufschrägen und die Seitenteile der jeweils benachbarten Kettenglieder mit bei Verschwenkung der Kettenglieder auf die Auflaufschrägen auflaufenden, d.h. entlang der Auflaufschrägen über einen Verschwenkwinkelbereich geführten Bereichen versehen sind. Hierdurch erfolgt bei der Verschwenkung der Kettenglieder eine Abbremsung bei der Abwinkelung benachbarter Kettenglieder zueinander, so daß die korrespondieren Anschläge mit verringerter Geschwindigkeit aufeinander auftreffen, wodurch die Geräuschemission bei der Verfahrung der Energieführungskette verringert wird, wobei durch die Auflaufbewegung Ausmaß und Geschwindigkeit der Abbremsung einfach und bei hoher Langlebigkeit der Energieführungskette einstellbar sind.

Vorteilhafte Weiterbildungen sind den Unteransprüchen zu entnehmen.

Die mit Auflaufschrägen versehenen und/oder die auf diese auflaufenden Bereiche des benachbarten Kettengliedes können elastisch deformierbare Elemente aufweisen, die bei einer Verschwenkung der Kettenglieder elastisch deformierbar sind. Durch die elastische Deformation der Elemente bei auf den Auflaufschrägen geführten Bereichen des benachbarten Kettengliedes bei der Verschwenkung der Kettenglieder erfolgt eine Abbremsung benachbarter Kettenglieder zueinander und eine Verringerung der Auftreffgeschwindigkeit der Anschläge. Das Ausmaß der Dämpfung ist dabei von der Neigung und Länge der Auflaufschrägen sowie der Elastizität der elastisch deformierbaren Elemente abhängig.

Die elastisch deformierbaren Elemente können als separate Federlemente ausgeführt sein oder bei entsprechender Elastizität des Materials, aus denen die Seitenteile bestehen, einstückig angeformte Bereiche der Seitenteile darstellen.

Sind die Seitenteile als miteinander korrespondierende Innen- und Außenlaschen ausgeführt, die im Bereich der Mittelebene einen quer zur Kettenlängsrichtung vorstehenden Dickstellenbereich aufweisen, so können die Auflaufschrägen beispielsweise an den seitlichen Begrenzungsflächen der Dickstellenbereiche oder den diesen gegenüberliegenden Bereichen des benachbarten Kettengliedes angeordnet sein. Entsprechend können bei gekröpften Seitenteilen die Auflaufschrägen im Bereich der Kröpfung bzw. an dem äußeren Umfang der Seitenteile angeordnet sein, die dem gekröpften Bereich der benachbarten Seitenwand zugewandt sind. Die Auflaufschrägen können beispielsweise auch als Zahnflanken oder als Wellenprofil ausgeführt sein, wobei die auf die Auflaufschrägen auflaufenden Bereiche des benachbarten Kettengliedes als in die Verzahnung des ersten Kettengliedes eingreifende Verzahnung mit unterschiedlicher Neigung der Zahnflanken oder Krümmung der Wellungen ausgeführt sein kann. Die Auflaufschrägen können auch in den Anschlägen integriert sein.

Die Auflaufhöhe des auf die Auflaufschräge auflaufenden Bereichs kann bei entsprechender Neigung der Auflaufschrägen überproportional mit dem Verschwenkwinkel zunehmen, so daß die Dämpfung mit zunehmender Abwinkelung der Kettenglieder zunimmt. Die Dämpfungscharakteristik ist somit durch die Kontur der Auflaufschräge einstellbar.

Die Neigung der Auflaufschrägen sowie die elastische Deformierbarkeit der mit den Auflaufschrägen versehenen Bereiche der Seitenteile oder der auf diesen auflaufend geführten Bereichen des benachbarten Kettengliedes sind vorteilhafterweise so aufeinander abgestimmt, daß die mit den Auflaufschrägen versehenen Bereiche des Seitenteils selbst als elastische Elemente wirken und aus einem Kunststoffmaterial bestehen, das auch für die Fertigung der Seitenteile einsetzbar ist. Die Seitenteile sind so einteilig herstellbar.

Vorteilhafterweise sind die Auflaufschrägen im wesentlichen senkrecht zu den jeweiligen Seitenteilen angeordnet. Die bei der Deformation der elastischen Elemente parallel zur Hauptebene der Seitenteile wirkenden Kräfte wirken somit auch radial auf die Gelenkverbindung, so daß die Dämpfung der Schwenkbewegung der Kettenglieder zueinander gleichzeitig zu einer Verringerung des Spiels benachbarter Kettenglieder zueinander und bis zu einer Verspannung der Kettenglieder führen kann, wenn die korrespondierenden Anschläge benachbarter Kettenglieder aneinander anliegen. Dies führt zu einer erhöhten Steifigkeit der Energieführungskette. Kraftkomponenten bei der Abbremsung der Kettenglieder, die senkrecht zur Verfahrrichtung der Energieführungskette auf die Seitenteile wirken, werden so vermieden.

Vorteilhafterweise enden die Auflaufschrägen auf Höhe der Anschlagflächen der Anschläge. Hierdurch ist eine maximale Verringerung der Auftreffgeschwindigkeit der Anschläge unmittelbar vor deren Auftreffen aufeinander und eine konstruktiv einfache Ausführungsform gegeben.

Eine einfache Ausführungsform, die zugleich eine gute Geräuschdämmung und hohe Lebensdauer der Energieführungskette gewährleistet, liegt vor, wenn die auf die Auflaufschrägen auflaufenden Bereiche Anschläge ausgebildet sind, die mit ihren seitlichen, d.h. radial innen und/oder außen liegenden Begrenzungsflächen mit den Auflaufschrägen zur Anlage bringbar sind. Die Anschläge können hierbei kreissegmentartig oder auch als im wesentlichen runde Anschlagbolzen ausgeführt sein.

Die Anschläge können kreisbogenförmige seitliche Begrenzungsflächen aufweisen, wobei die Auflaufschrägen ausgehend von einer kreisbogenförmigen Krümmung als Bereiche mit hierzu im wesentlichen tangentialen Verlauf ausgeführt sind. Hierdurch liegt eine Ausführungsform vor, die sowohl fertigungstechnisch einfach herstellbar ist als auch bei zunehmender Verschwenkung der Kettenglieder eine ebenfalls zunehmende Dämpfung der Verschwenkung der Kettenglieder ermöglicht.

Erstrecken sich die Auflaufschrägen lediglich über einen Teil des Winkelbereichs der Anschläge, so kann der erste Teil der Verschwenkung der Kettenglieder zueinander ungebremst erfolgen.

Vorteilhafterweise sind an dem Gelenk miteinander verbundenen Seitenteilen benachbarter Kettenglieder mindestens zwei umfänglich um die Verschwenkachse verteilt angeordnete Auflaufschrägen und auf diese auflaufend geführte Bereiche benachbarter Kettenglieder vorgesehen. Die Verringerung der Abwinkelungsgeschwindigkeit der Kettenglieder zueinander bei einer Verfahrung der Energieführungskette wird erhöht und damit die Geräuschemission weiter verringert. Des weiteren ist hierdurch bei einer Abwinkelung der Kettenglieder eine Verspannung benachbarter Kettenglieder ohne resultierende radiale Kraftkomponente möglich, so daß durch die Verteilung der Auflaufschrägen um die Verschwenkachse die Gelenkverbindung der Kettenglieder entlastet wird. Durch die Verspannung wird gleichzeitig das Spiel der Kettenglieder im Gelenkbereich verringert, wodurch eine Selbstzentrierung der Seitenteile bezüglich der Verschwenkachse erfolgt und sowohl der Verschleiß im Bereich der Gelenkverbindung verringert wird als auch die Teilungslänge der Energieführungskette, d.h., die Länge der Energieführungskette je Kettenglied, nicht vergrößert wird. Dies führt zu einer Verbesserung der Richtungsstabilität bei Verfahrung der Energieführungskette.

Vorteilhafterweise sind die Auflaufschrägen bezüglich der Verschwenkachse diamentral einander gegenüberliegend angeordnet. Es können jedoch auch beispielsweise drei gleichmäßig um die Verschwenkache verteilt angeordnete Auflaufschrägen vorgesehen werden.

Vorteilhafterweise sind die Anschläge zusätzlich mit Hinterschneidungen versehen, die die korrespondierenden Anschläge hintergreifen können. Eine seitliche Abwinkelung der benachbarten Seitenteile zueinander ist so verhindert und dadurch die Stabilität der Energieführungskette erhöht.

Die vorliegende Erfindung ist nicht auf Energieführungsketten beschränkt, die aus gekröpften Seitenteilen oder aus alternierenden Innen- und Außenlaschen bestehenden Strängen von Seitenteilen aufgebaut sind sondern ist vielmehr unabhängig von der konkreten Ausgestaltung der Seitenteile. Die Seitenteile können dabei lösbar oder einteilig mit den Querstegen verbunden sein.

Die Erfindung ist nachfolgend beispielhaft beschrieben und anhand der Zeichnung beispielhaft veranschaulicht. Es zeigen:

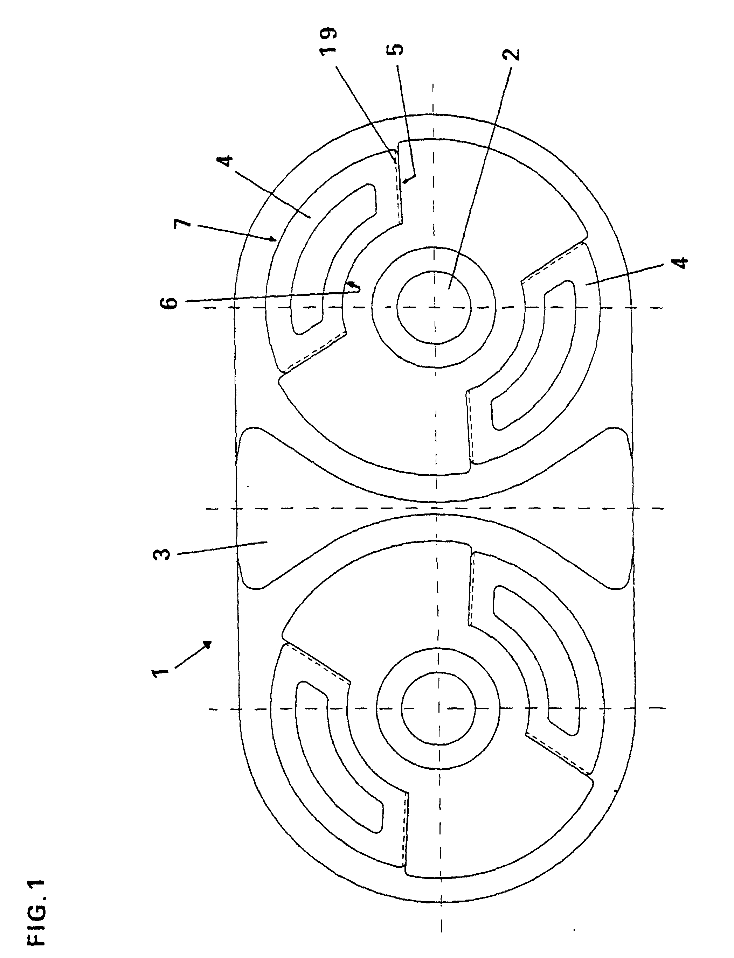

- Fig. 1: ein als Innenlasche ausgeführtes Seitenteil einer Energieführungskette,
- Fig. 2: ein als korrespondierende Außenlasche einer Energieführungskette ausgeführtes Seitenteil mit Auflaufschrägen.

Das als Innenlasche 1 ausgeführte Seitenteil einer Energieführungskette, die aus Strängen von alternierend angeordneten Außen- und Innenlaschen besteht, ist mit zwei einstückig angeformten Gelenkzapfen 2 versehen, die zur gelenkigen Anordnung der Kettenglieder aneinander in korrespondierende Ausnehmungen des benachbarten Kettengliedes einführbar sind. Die spiegelsymmetrische Innenlasche 1 ist mittig mit einem Dickstellenbereich 3 versehen, der im montieren Zustand der Innenlasche 1 von der Energieführungskette seitwärts nach außen gerichtet angeordnet ist. Die mit den korrespondierenden Außenlaschen überlappenden Bereiche der Innenlasche 1 sind mit zwei Anschlägen 4 versehen, die bezüglich der durch den Gelenkzapfen 2 verlaufenden Verschwenkachse diamentral gegenüberliegend angeordnet und kreissegmentartig ausgebildet sind. Die Anschläge 4 weisen zwei ebene Anschlägflächen 5 auf, die mit korrespondierenden Anschlägen des benachbarten Seitenteils zur Begrenzung des Verschwenkwinkels der Kettenglieder zur Anlage bringbar sind. Die zwischen den beiden Anschlagflächen 5 angeordneten seitlichen Begrenzungsflächen des Anschlages 4 sind kreisbogenförmig ausgebildet, wobei die radial innenliegende seitliche Begrenzungsfläche 6 den Abstand d₁ und die radial außenliegende seitliche Begrenzungsfläche 7 den Abstand d₂ zur Verschwenkachse aufweist.

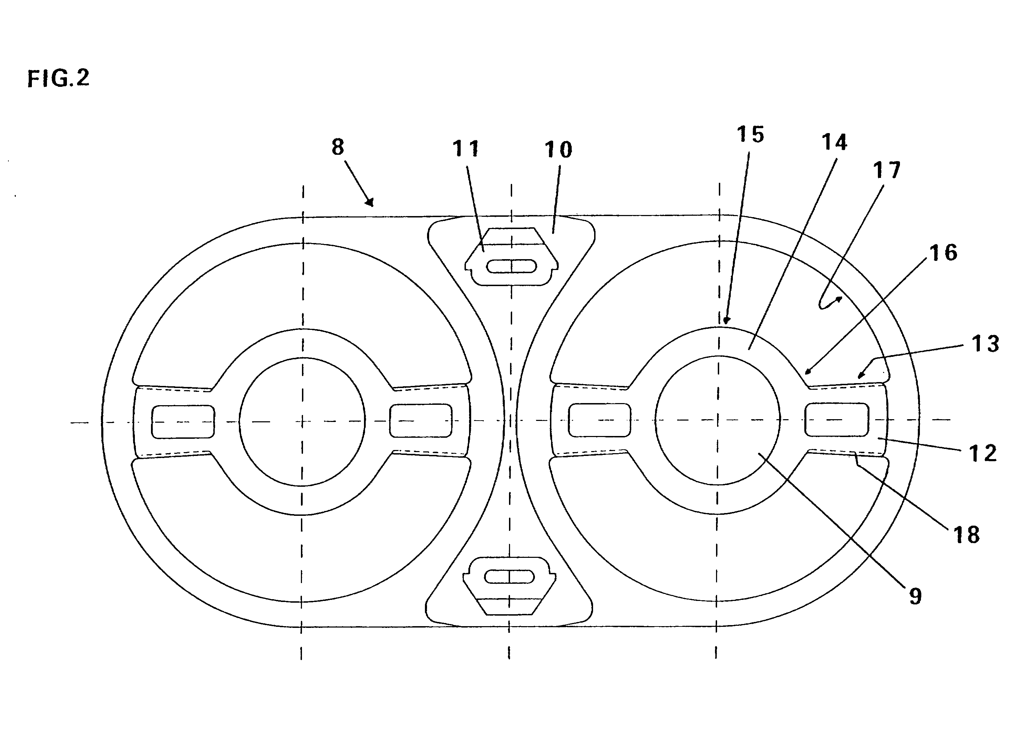

Die in Figur 2 dargestellte mit der Innenlasche 1 korrespondierende Außenlasche 8 weist in ihren mit den Innenlaschen 1 überlappenden Bereichen zwei Ausnehmungen 9 auf, in die die Gelenkzapfen 2 der benachbarten Innenlaschen 1 einführbar sind. Die Außenlaschen 8, die spiegelsymmetrisch zur Längsachse und zu der dazu senkrecht stehenden Mittelebene der Seitenteile ausgebildet sind, weisen Dickstellenbereiche 10 auf, die mit zum Ketteninneren vorstehenden Rastvorsprüngen 11 versehen sind, mittels derer die Innenlaschen über nicht näher dargestellte Querstege miteinander verbunden werden können. Die Außenlaschen 8 sind im Bereich der Ausnehmungen 9 jeweils mit zwei Anschlägen 12 versehen, die mit ihren ebenen Anschlagflächen 13 an die Anschläge 4 der Innenlaschen 1 anlegbar sind.

Der die Ausnehmung 9 umgebende, umlaufende Rand 14 weist an seiner radial außenliegenden Begrenzungsfläche in dem mittig zwischen den Anschlägen 12 liegendem Bereich 15 einen Abstand d₃ zur Verschwenkachse auf, der geringfügig kleiner ist als der Abstand d₁ der radial innenliegenden Begrenzungsfläche 6 des korrespondierenden Alnschlages 4. Der Anschlag 4 wird somit im Bereich 15 mit geringem Spiel bei einer Verschwenkung der benachbarten Seitenteile um den Rand 14 geführt. In Richtung auf die Anschlagflächen 13 der Anschläge 12 hin vergrößert sich der Abstand des Randes 14 zur Verschwenkachse und läuft ausgehend von einem kreisförmig gebogenen Bereich in den tangentialen zum Bereich 15 geführten Bereich 16 aus, der im Abstand d₄ an den Anschlag 12 angrenzt. Der Abstand des tangentialen Bereichs 16 im Bereich der Anschlagfläche 13 ist dabei geringfügig größer als der Abstand d₁ der Begrenzungsfläche 6 des mit dem Anschlag 12 korrespondierenden Anschlages 4 der Innenlasche 1. Entsprechendes gilt aufgrund der Symmetrie der Außenlasche für die Ausbildung des in Fig. 2 unten liegenden Bereichs des Randes 14. Die Auflaufschrägen weisen somit gegenüber der Verfahrrichtung der auf diese auflaufenden Bereiche des benachbarten Seitenteils eine nur geringe Steigung, d.h. eine solche von bis zu einigen Grad, auf und sind somit vergleichsweise flach ausgeführt. Des weiteren weisen die Außenlaschen 8 einen Rand 17 mit einem Abstand zur Verschwenkachse auf, der geringfügig größer ist als der Abstand d₂ der radial außenliegenden Begrenzungsfläche 7 der Anschläge 4 ist und somit die Anschläge 4 mit geringem Spiel umgibt.

Bei Verschwenkung der Innenlaschen 1 gegen die Außenlaschen 8 kommt die innenliegende Begrenzungsfläche 6 der Anschläge 4 bei einem vorgegebenen Verschwenkwinkel mit den tangentialen Bereichen 16 des Randes 14 zur Anlage. Bei weiterer Verschwenkung fungieren die tangentialen Bereiche 16 als Auflaufschrägen, auf die die Anschläge 4 auflaufen. Hierbei werden aufgrund der Elastizität des Materials, aus dem die einstückig hergestellten Außen- und Innenlaschen hergestellt sind, sowohl der tangentiale Bereich 16 als auch der an diesem anliegende Bereich der Begrenzungsfläche 6 elastisch deformiert. Dies erzeugt eine Abbremsung der Kettenlaschen, so daß die Abwinkelungsgeschwindigkeit der Kettenlaschen verringert wird und die korrespondierenden Anschlagflächen mit verrringerter Geschwindigkeit miteinander zur Anlage kommen. Aufgrund der Energieabsorption durch die elastischen Elemente wird die Geräuschemmission bei Verfahrung der Energieführungskette vermindert. Da die wirksame Länge der tangentialen Bereiche geringer ist, als die Länge der Anschläge, erfolgt eine Abbremsung der Anschläge erst nach einem gewissen Verfahrweg, was zur gleichmäßigen Verfahrbarkeit der Energieführungskette führt.

Des weiteren ist es möglich, den Rand 17 mit einer radial nach innen vorspringenen Auflaufschräge zu versehen, die mit der radial außenliegenden Begrenzungsfläche 7 des Anschlages 4 bei Verschwenkung der Kettenglieder zur Anlage bringbar ist. Die Anordnung der als Auflaufschrägen wirkenden tangentialen Bereiche 16 am Rand 14 hat jedoch den Vorteil, daß dieser Bereich mit einer geringeren Umlaufgeschwindigkeit bewegt wird als ein radial weiter außen liegender Bereich, so daß die korrespondieren Bereiche der Innen- und Außenlaschen mit geringerer Relativgeschwindigkeit zueinander bewegt werden und eine bessere Dämpfung der Bewegung und damit größere Verringerung der Geräuschemmission erzielt werden kann.

Dadurch, daß der Rand 14 mit zwei jeweils diamentral der Verschwenkachse gegenüberliegenden Paaren von Auflaufschrägen 16 versehen ist, die jeweils mit entsprechenden Bereichen der korrespondierenden Anschläge 4 unter elastischer Deformation zur Anlage gebracht und damit verspannt werden, heben sich die radial nach außen wirkenden Kräfte der deformierten Bereiche auf, so daß auf die Gelenkverbindung keine zusätzlichen radialen Kräfte einwirken, die einen erhöhten Verschleiß bedingen würden. Vielmehr werden die Außenlaschen 8 mit den Innenlaschen 1 verspannt, so daß das Spiel der Laschen zueinander bei zunehmender Annäherung der korrespondierenden Anschläge 4 und 12 verringert wird und minimal ist, wenn die Anschläge 4 und 12 aneinander anliegen. Der Verschleiß im Gelenkbereich der Kettenglieder wird hierdurch deutlich vermindert und die Richtungsstabilität bei Verfahrung der Energieführungskette erhöht.

Des weiteren sind die Anschläge 12 mit Hinterschneidungen 18 versehen, die mit Abschrägungen 19 versehene Anschläge 4 hintergreifen können, so daß eine seitliche Abwinkelung benachbarter Kettenglieder zueinander verhindert ist.

Dadurch, daß die als Auflaufschrägen wirkenden tangentialen Bereiche 16 sich über einen größeren Winkelbereich um die Verschwenkachse erstrecken, ist auch bei nur geringer Höhe der Auflaufschrägen eine deutliche und gleichmäßige Verzögerung der Abwinkelgeschwindigkeit benachbarter Seitenteile zueinander und damit eine deutliche Senkung der Geräuschemmission ermöglicht.

### Bezugszeichenliste

- 1: Innenlasche
- 2: Gelenkzapfen
- 3: Dickstellenbereich
- 4: Anschlag
- 5: Anschlagfläche
- 6: Begrenzungsfläche
- 7: Begrenzungsfläche
- 8: Außenlasche
- 9: Ausnehmung
- 10: Dickstellenbereich
- 11: Rastvorsprung
- 12: Anschlag
- 13: Anschlagfläche
- 14: Rand
- 15: kreisförmiger Bereich
- 16: tangentialer Bereich
- 17: Rand
- 18: Hinterschneidung
- 19: Abschrägung

## Patentansprüche

1. Energieführungskette zur Führung von Schläuchen oder dergleichen zwischen zwei Anschlußpunkten, von denen wenigstens einer ortsveränderlich ist, mit mehreren gelenkig miteinander verbundenen Kettengliedern aus Seitenteilen und Querstegen, wobei die Verschwenkbarkeit benachbarter Kettenglieder gegeneinander durch an den Kettengliedern angeordnete korrespondierende Anschläge mit Anschlagflächen begrenzt ist und die Kettenglieder mit Mitteln zur Verringerung der Abwinkelungsgeschwindigkeit benachbarter Kettenglieder zueinander versehen sind, **dadurch gekennzeichnet**, daß die Mittel zur Verringerung der Abwinkelungsgeschwindigkeit derart ausgebildet sind, daß die Seitenteile (1, 8) mit Auflaufschrägen und die Seitenteile der jeweils benachbarten Kettenglieder mit bei Verschwenkung der Kettenglieder auf die Auflaufschrägen auflaufenden und entlang der Auflaufschrägen über einen Verschwenkwinkel geführten Bereichen (4) versehen sind.

2. Energieführungskette nach Anspruch 1, **dadurch gekennzeichnet**, daß die mit Auflaufschrägen versehenen und/oder die auf diese auflaufenden Bereiche des benachbarten Kettengliedes elastisch deformierbare Elemente aufweisen, die bei Verschwenkung der Kettenglieder elastisch deformierbar sind.

3. Energieführungskette nach Anspruch 1 oder 2, **dadurch gekennzeichnet**, daß die Auflaufschrägen (16) senkrecht zu den Seitenteilen (1, 8) angeordnet sind.

4. Energieführungskette nach einem der Ansprüche 1 bis 3, **dadurch gekennzeichnet**, daß die Auflaufschrägen (16) auf Höhe der Anschlagflächen (13) der Anschläge (12) enden.

5. Energieführungskette nach einem der Ansprüche 1 bis 4, **dadurch gekennzeichnet**, daß die auf die Auflaufschrägen auflaufenden Bereiche als Anschläge (4) ausgebildet sind, die mit mindestens einer ihrer seitlichen Begrenzungsflächen (6, 7) mit den Auflaufschrägen (16) zur Anlage bringbar sind.

6. Energieführungskette nach einem der Ansprüche 1 bis 5, **dadurch gekennzeichnet**, daß die Anschläge kreisbogenförmige Seitenflächen aufweisen und auf Auflaufschrägen auflaufen, die ausgehend von einer kreisförmigen Krümmung als Bereiche mit im wesentlichen tangentialem Verlauf ausgeführt sind.

7. Energieführungskette nach einem der Ansprüch 1 bis 6, **dadurch gekennzeichnet**, daß die Auflaufschrägen (16) sich lediglich über einen Teil der Winkelerstreckung der Anschläge (4) erstrecken.

8. Energieführungskette nach einem der Ansprüche 1 bis 7, **dadurch gekennzeichnet**, daß an dem gelenkig miteinander verbundenen Seitenteilen benachbarter Kettenglieder mindestens zwei, umfänglich um die Verschwenkachse verteilt angeordnete Auflaufschrägen (16) und auf diese auflaufend geführte Bereiche benachbarter Kettenglieder vorgesehen sind.

9. Energieführungskette nach Anspruch 8, **dadurch gekennzeichnet**, daß die Auflaufschrägen (16) bezüglich der Verschwenkachse diamentral einander gegenüberliegend angeordnet sind.

10. Energieführungskette nach einem der Ansprüche 1 bis 9, **dadurch gekennzeichnet**, daß die Anschläge mit Hinterschneidungen (18) versehen sind, die von den korrespondierenden Anschlägen hintergreifbar sind.

## Claims

1. Energy guiding chain for guiding hoses and the like between two connecting points, the position of at least one of which can be changed, with several chain links comprising side elements and cross-members connected to each other in articulated fashion, where the pivoting of adjacent chain links relative to each other is limited by corresponding stops with contact surfaces arranged on the chain links and the chain links are provided with means for reducing the angling speed of adjacent chain links relative to each other, **characterised in that** the means for reducing the angling speed are designed in such a manner that the side elements (1, 8) are provided with run-up bevels and the side elements of the respective adjacent chain links are provided with areas (4) which run up the run-up bevels over a pivoting angle when the chain links are pivoted.

2. Energy guiding chain according to Claim 1, **characterised in that** the areas provided with run-up bevels and/or the areas of the adjacent chain link which run up these bevels display elastically deformable elements which can be deformed elastically when the chain links are pivoted.

3. Energy guiding chain according to Claim 1 or 2, **characterised in that** the run-up bevels (16) are arranged perpendicular to the side elements (1, 8).

4. Energy guiding chain according to one of the Claims 1 to 3, **characterised in that** the run-up bevels (16) end at the level of the contact surfaces (13) of the stops (12).

5. Energy guiding chain according to one of the Claims 1 to 4, **characterised in that** the areas running up the run-up bevels are designed as stops (4), at least one lateral limiting surface (6, 7) of which can be brought into contact with the run-up bevels (16).

6. Energy guiding chain according to one of the Claims 1 to 5, **characterised in that** the stops display arc-like lateral surfaces and run up run-up bevels designed as areas running essentially tangentially from a circular curve.

7. Energy guiding chain according to one of the Claims 1 to 6, **characterised in that** the run-up bevels (16) only extend over part of the angular length of the stops (4).

8. Energy guiding chain according to one of the Claims 1 to 7, **characterised in that** the side elements of adjacent chain links connected in articulated fashion are provided with at least two run-up bevels (16) distributed around the circumference of the pivoting axis and that areas of adjacent chain links guided over these are provided.

9. Energy guiding chain according to Claim 8, **characterised in that** the run-up bevels (16) are arranged diametrically opposite each other relative to the pivoting axis.

10. Energy guiding chain according to one of the Claims 1 to 9, **characterised in that** the stops are provided with undercuts (18) which can be engaged by the corresponding stops.

## Revendications

1. Chaîne de transmission d'énergie destinée au guidage de tuyaux ou similaires entre deux points de raccordement, dont l'un au moins est un point de raccordement stationnaire, comprenant plusieurs maillons de chaîne reliés de manière articulée les uns aux autres et formés de parties latérales et de barrettes transversales, la faculté de pivotement des maillons de chaîne voisins les uns vis-à-vis des autres étant limitée par des butées correspondantes agencées sur les maillons de chaîne et présentant des surfaces de butée, et les maillons de chaîne sont dotés de moyens pour réduire la vitesse de déflexion de maillons de chaîne voisins les uns vis-à-vis des autres, caractérisée en ce que les moyens pour réduire la vitesse de déflexion sont ainsi réalisés que les parties latérales (1, 8) sont pourvues de pentes d'introduction, et les parties latérales des maillons de chaîne respectivement voisins sont pourvues de zones (4) qui, lors du pivotement des maillons de chaîne, circulent sur les pentes d'introduction, et sont menées le long des pentes d'introduction sur un certain angle de pivotement.

2. Chaîne de transmission d'énergie selon la revendication 1, caractérisée en ce que les régions pourvues de pentes d'introduction et/ou les régions circulant sur ces pentes du maillon de chaîne voisin, présentent des éléments élastiquement déformables, lesquels sont déformables de manière élastique lors du pivotement des maillons de chaîne.

3. Chaîne de transmission d'énergie selon l'une ou l'autre des revendications 1 et 2, caractérisée en ce que les pentes d'introduction (16) sont agencées perpendiculairement aux parties latérales (1, 8).

4. Chaîne de transmission d'énergie selon l'une des revendications 1 à 3, caractérisée en ce que les pentes d'introduction (16) se terminent à la hauteur des surfaces de butée (13) des butées (12).

5. Chaîne de transmission d'énergie selon l'une des revendications 1 à 4, caractérisée en ce que les zones qui circulent sur les pentes d'introduction sont réalisées sous forme de butées (4), lesquelles sont susceptibles d'être amenées en contact contre les pentes d'introduction (16) par l'une au moins de leurs surfaces de délimitation latérales (6, 7).

6. Chaîne de transmission d'énergie selon l'une des revendications 1 à 5, caractérisée en ce que les butées présentent des surfaces latérales en forme d'arcs de cercle, et circulent sur des pentes d'introduction qui, partant d'une courbure en forme de cercle, sont réalisées comme des zones avec tracé essentiellement tangentiel.

7. Chaîne de transmission d'énergie selon l'une des revendications 1 à 6, caractérisée en ce que les pentes d'introduction (16) s'étendent simplement sur une partie de l'étendue angulaire des butées (4).

8. Chaîne de transmission d'énergie selon l'une des revendications 1 à 7, caractérisée en ce que sur les parties latérales, reliées de façon articulée les unes aux autres, de maillons de chaîne voisins, il est prévu au moins deux pentes d'introduction (16), agencées en répartition périphérique autour de l'axe de pivotement, et sur les maillons de chaîne voisins il est prévu des zones qui sont menées en circulation sur ces pentes d'introduction.

9. Chaîne de transmission d'énergie selon la revendication 8, caractérisée en ce que les pentes d'introduction (16) sont agencées en opposition mutuelle diamétrale vis-à-vis de l'axe de pivotement.

10. Chaîne de transmission d'énergie selon l'une des revendications 1 à 9, caractérisée en ce que les butées sont pourvues de contre-dépouilles (18), susceptibles d'être engagées par l'arrière par les butées correspondantes.
